# EUROPEAN PATENT SPECIFICATION

(11) **EP 2 051 898 B1**
(45) Date of publication and mention of the grant of the patent: **28.04.2010**
(21) Application number: 07805335.2
(22) Date of filing: 07.08.2007
(51) Int. Cl.: B62J 1/02

(54) **SHOCK-ABSORBING DEVICE FOR SEATING STRUCTURES AND SEATING STRUCTURE INCORPORATING SUCH DEVICE**
STOSSDÄMPFENDE VORRICHTUNG FÜR SITZKONSTRUKTIONEN UND SITZKONSTRUKTION MIT DERARTIGER VORRICHTUNG
DISPOSITIF D'ABSORPTION DE CHOCS POUR DES STRUCTURES DE SIÈGE ET STRUCTURE DE SIÈGE INCORPORANT UN TEL DISPOSITIF

(30) Priority: 09.08.2006 IT VI20060253
(43) Date of publication of application: 29.04.2009
(73) Proprietor: SELLE ROYAL S.P.A., 36050 Pozzoleone (Vicenza) (IT)
(72) Inventor: SEGATO, Stefano, I-36100 Vicenza (IT)
(74) Representative: Feltrinelli, Secondo Andrea
(86) International application number: PCT/IB2007/053113
(87) International publication number: WO 2008/018023

(56) References cited:
- DE-C- 546 816
- GB-A- 156 184

## Description

### Field of the invention

The present invention generally finds application in the field of sport and leisure accessories, and particularly relates to a shock-absorbing device for mounting to a seating structure. The device is particularly suitable for mounting to chairs, bicycle saddles and vehicle seats in general.

The invention further relates to a seating structure incorporating one or more of such shock-absorbing devices.

### Background of the invention

Seating structures, such as chairs, bicycle saddles and vehicle seats in general, are known to be required to meet adequate structural strength and compactness needs, in addition to user comfort and convenience requirements.

For this purpose, seating structures are known which have pads of resilient materials, such as sponge, foam, polyurethane foam or gel. Furthermore, they may have bottom spring members or the like, to oppose the user's weight and to absorb any shock or abrupt oscillation.

An apparent drawback of these solutions is that these shock-absorbing devices have an excessively rigid response to stresses.

Furthermore, when shock-absorbing members of polymer or metal materials are used, these may lose elasticity with time until they cause the whole seat to be stiffened, thereby affecting its comfort characteristics.

In an attempt to obviate the above drawbacks, a number of seating arrangements have been provided, which comprise one or more shock-absorbing members having an air chamber, to use air and other gases as shock-absorbing means, for gradual absorption of stresses from the ground and improved seating comfort.

Italian patent no. IT1234275 discloses, for example, a bicycle saddle connected to the frame by means of two or more air springs, which essentially comprise an internally hollow resilient air chamber-defining body having the function of damping the vibrations produced by ordinary bicycle operation.

While this solution provides a substantially constant elastic response with time, notwithstanding any minor changes caused by normal deterioration of the elastic properties of the body material, it still does not allow control of spring compression and expansion.

Therefore, spring response to stresses associated to ordinary bicycle operation are still not sufficiently damped and the saddle will not adequately absorb such stresses, thereby apparently affecting comfort.

GB 156184 discloses a pneumatic spring comprising a flexible air reservoir, tubular neck portions formed integral therewith and extending outwards therefrom and spherical bladder members formed integral with the necks and in communication with the reservoir. The reservoir is enclosed in a rigid casing, while the bladders rest on deforming members. This system provides as a whole a two chambers air spring, formed by an expandable chamber and a rigid chamber.

### Summary of the invention

The object of this invention is to overcome the above drawbacks, by providing a shock-absorbing device for seating structures that is highly efficient and relatively cost-effective.

A particular object is to provide a shock-absorbing device that allows highly gradual absorption of the stresses produced during normal operation of the seat with the device mounted thereto.

A further object is to provide a shock-absorbing device that has as little and gradual elastic movements to minimize stress transmission to the seat on which it is mounted.

Yet another object of the invention is to provide a seating structure that is as convenient and comfortable as possible for a user.

These and other objects, as better explained hereafter, are fulfilled by a shock-absorbing device as defined in claim 1, attachable to a seating structure such as a bicycle saddle, which comprises a user weight supporting shell attached to a load-bearing frame, wherein the device comprises at least one main hollow body of a first elastomeric material that defines an elastically deformable compression chamber, at least one secondary hollow body of a second elastomeric material that defines an elastically deformable expansion chamber, at least one channel for fluid connection between said chambers to allow fluid transfer from one chamber to the other and vice versa, means for attachment of said at least one main body and said at least one secondary body to the seating structure with which the device is associated.

The connection channel has valve means for controlling fluid flow between the chambers in response to elastic deformation thereof.

Thanks to this peculiar feature of the invention, the valve means allow to control the velocity of the fluid flowing into each of the chambers to control deformation of the latter and reduce the intensity of stress transmitted to the associated seat.

Advantageously, the valve means may include a restriction channel of predetermined length, having a sufficiently small cross section to cause a considerable change in the flow velocity of said fluid.

The cross section of the channel may preferably have a maximum diameter of 0,1 mm and 10 mm and preferably of about 0,5 mm.

Thus, the change of fluid velocity within the channel will cause high energy dissipation, to slow down the reciprocating expansion and compression movements of the chambers and absorb the whole stress, while minimizing or suppressing the stress transmitted to the seat.

In another aspect, the invention provides a seating structure for human body support, particularly a bicycle saddle structure, which incorporates at least one shock-absorbing device as defined in any one of claims 1 to 13.

### Brief description of drawings

Further features and advantages of the invention will be more apparent upon reading the detailed description of a preferred, non-exclusive embodiment of a shock-absorbing device for seating structures and a seating structure according to the invention, which is described as a non-limiting example with reference to the annexed drawings, in which:
FIG. 1 is a perspective view of a shock-absorbing device according to the invention;
FIG. 2 is a front view of the device of Fig. 1;
FIG. 3 is a broken away front view as taken along the plane I-I of the device of Fig. 2;
FIG. 4 is a perspective view of a bicycle saddle comprising a seating structure of the invention, which incorporates a pair of devices as shown in Fig. 1;
FIG. 5 is an exploded perspective view of the saddle of Fig. 4;
FIG. 6 is a rear view of the saddle of Fig. 4.

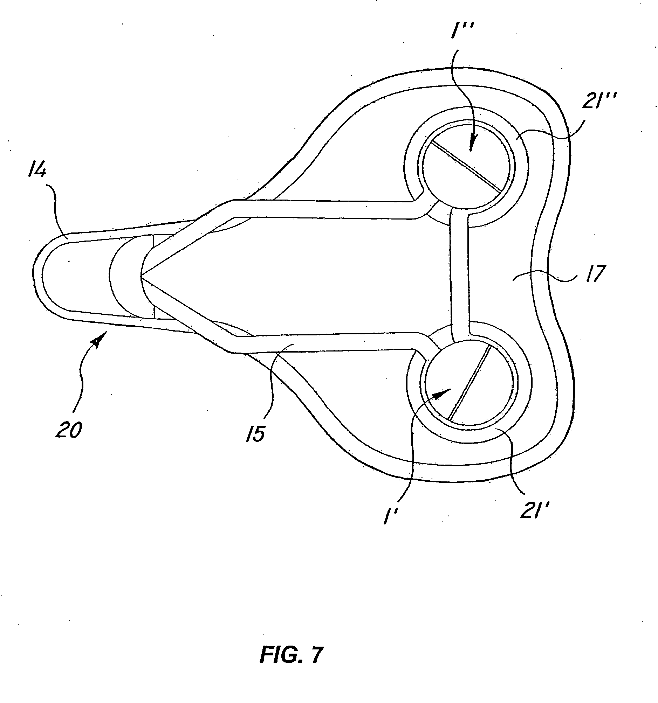

FIG. 7 is a bottom view of the saddle of Fig. 4.

### Detailed description of a preferred embodiment

Referring to the above figures, the shock-absorbing device of the invention, generally designated by numeral 1, may be fixedly or removably mounted to seating structures such as chairs, bicycle saddles and vehicle seats in general.

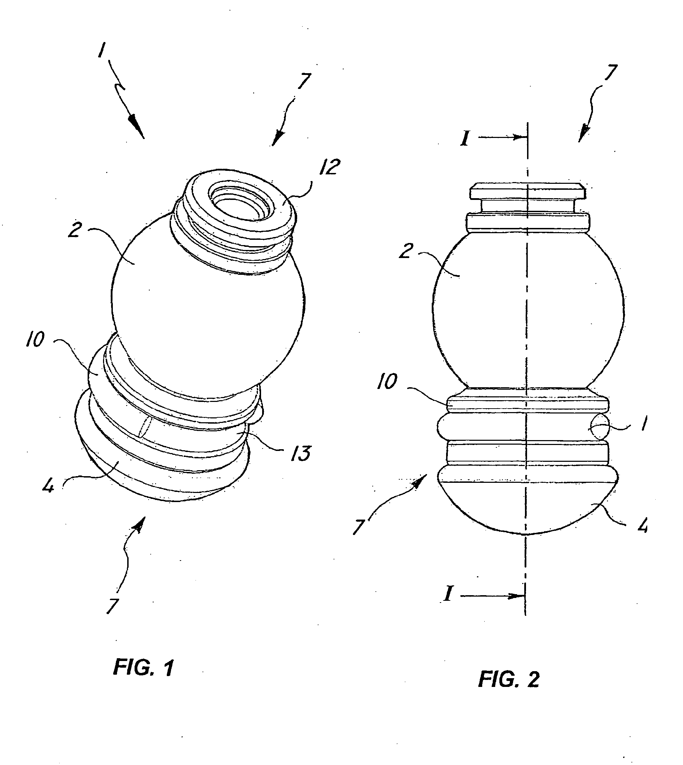

According to the invention, the shock absorber as seen in FIG. 1 comprises a main hollow body 2 of a first elastomeric material that defines an elastically deformable compression chamber 3, a secondary hollow body 4 of a second elastomeric material that defines an elastically deformable expansion chamber 5, and a conduit 6 for fluid connection between the chambers 3, 5 to allow fluid transfer from one chamber to the other and vice versa.

Means 7 are further provided for attachment of the main body 2 and the secondary body 4 to the seating structure with which the device 1 is associated.

According to a peculiar feature of the invention, the connection conduit 6 has valve means 8 for controlling fluid flow the compression chamber 3 and the expansion chamber 5 in response to elastic deformation thereof.

Advantageously, the valve means 8 may include a restriction channel 9 of predetermined length I, which is caused to communicate on one side with the compression chamber 3 and on the other side with the expansion chamber 5.

The restriction channel 9 may be of constant cross section s all along its length I or possibly of varying section, anyway having a minimum diameter d_{MIN} of a sufficiently small value to cause high energy dissipation due to a change in the velocity of fluid flowing between the two chambers 3 and 5.

Particularly. the minimum diameter value d_{MIN} of the cross section s of the restriction channel 9 may be of 0,1 mm to 10 mm, but preferably of about 0,5 mm.

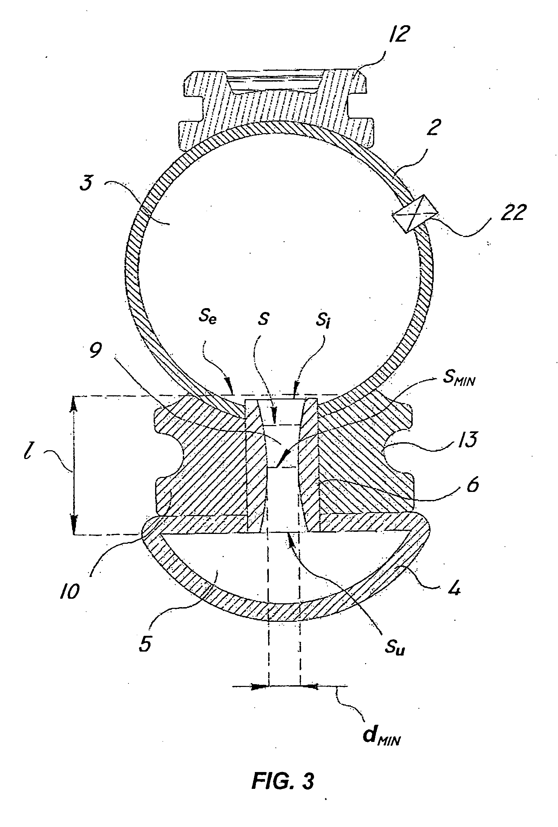

In the configuration of FIG. 3, the restriction channel 9 has its minimum diameter d_{MIN} at a substantially central restriction section s_{MIN}, with downstream and upstream sections diverging in a substantially symmetric manner with respect to it.

Nevertheless, other solutions may be provided, with one or more restriction sections s_{MIN} at any cross section s, e.g. at the inlet section sᵢ and output section sᵤ of the restriction channel 9, without limiting the scope of the present invention.

The restriction channel 9 may be embedded in a portion 10 between the two bodies 2, 4 and may be also formed of an elastomeric material.

Nevertheless, the restriction channel 9 may preferably be a metal capillary tube, to be fixedly or removably inserted between the two chambers 3, 5 and locked therebetween by interference or hot-melt or cold gluing.

The working fluid may be selected either from the group comprising compressible fluids or mixtures of fluids, or from the group comprising incompressible fluids or mixtures of fluids.

The former case may involve, for example, the use of air or another gas, or mixture of gases, preferably of light, inert type, whereas the latter case may involve, for example, the use of water, oil or another liquid or a mixture of liquids of the substantially uncompressible type.

Additionally, the fluid or mixture of fluids may be preloaded with nanometric ferromagnetic particles, which are designed to be oriented along a predetermined direction under the action of external magnetic fields to change the properties of the fluid.

Under a state of no compression or expansion of the two chambers 3 and 5, the fluid in the device 1 may be either at ambient pressure or preloaded with a pressure of 1 bar to 10 bar and preferably of 1,3 bar to 3,0 bar, e.g. 2,5 bar.

In this case, the valve means 8 may include at least one valve 22 for regulating fluid preload pressure.

The regulating valve 22 may be in fluid connection with any one of the compression chamber 3, the expansion chamber 5 and the restriction channel 9, to cause the inside of the device 1 to communicate with the outside or with external pressure means, not shown for their being known per se, which are designed to set the preload pressure.

In FIG. 3, the valve 22 is schematically shown against the wall of the compression chamber 3 but may be placed, in a substantially equivalent manner, in any other position, and also at the attachment portions 12, 13, to provide fluid connection of the chambers 3, 5 or the channel 9 with the outside.

The main body 2 and the secondary body 4 may be monolithically joined together and possibly integrally formed of the same elastomeric material, such as TPU, SEBS, vulcanized rubber, Megol.

Thus, during normal operation of the seat, the stresses transmitted from the support structure whereto the seating structure 11 is mounted, such as a bicycle frame, known per se and thus not shown, will be partly absorbed by the elastic reaction of the device 1.

This reaction will also vary depending on the elastic properties of the selected elastomeric materials, as well as on the value of fluid preload pressure in the compression 3 and expansion 5 chambers.

Upon compression of the compression chamber 3, the fluid therein will be caused to flow towards the expansion chamber 5 which will tend to yield thereby absorbing a further part of external stress.

Thanks to the considerable difference between the outlet section s_{c} of the compression chamber 3 and the inlet section sᵢ of the channel 9, possibly inserted in the chamber 3 itself, fluid will flow therein in substantially turbulent motion thereby dissipating a large amount of energy and causing gradual expansion of the expansion chamber 5.

The flow of fluid from the expansion chamber 5 to the compression chamber 3, occurring when the stress has been absorbed and the whole structure 11, with the device 1 associated thereto, tends to recover its rest position, will be substantially identical and reversed to that described above.

Thus, the reciprocating compression and expansion movements of the two chambers 3, 5 will be strongly attenuated and progressive, thereby providing considerable benefits for the comfort of the whole seat, which will not be subjected to excessive movements caused by an impulsive elastic response by the shock-absorbing device 1, like in prior art devices.

The attachment means 7 may include an upper portion 12 and a lower portion 13 which are integral with the main body 2, each being removably connectable to any one of the shell 14 and load bearing frame 15 of the seating structure 11 with which the device 1 is associated.

In an alternative embodiment, not illustrated, the device 1 may include a pair of main hollow bodies 2, each defining a compression chamber 3 and a single secondary hollow body 4 which is integral with both main bodies 2.

In this configuration, the secondary body 4 may define a pair of expansion chambers 5 which are divided by an intermediate rigid or elastic wall, each being connected to a corresponding compression chamber 3 via respective restriction channels 9.

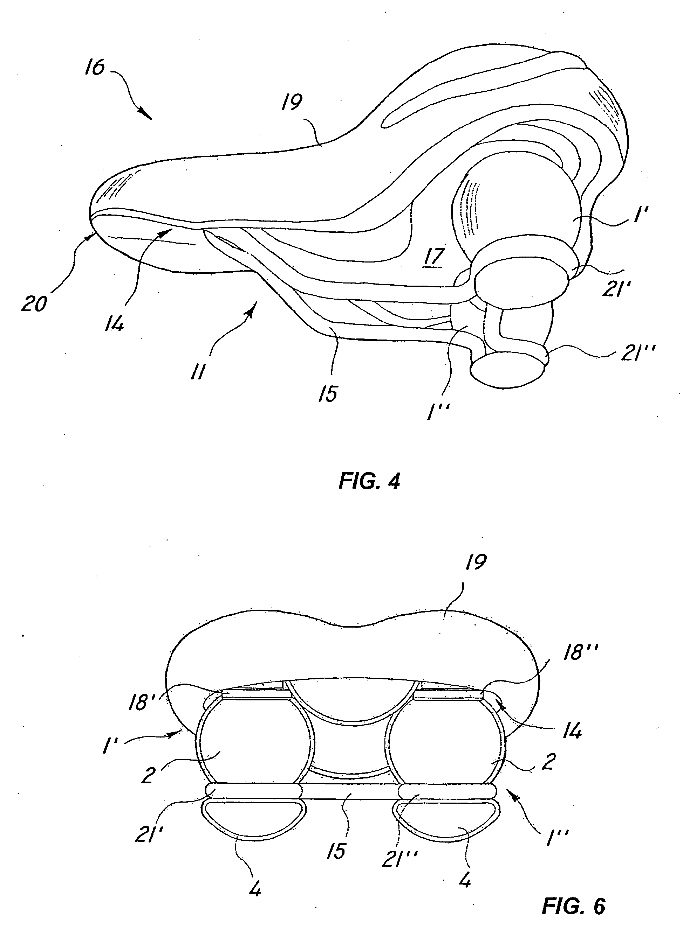

A particular application of the device 1 is depicted in FIG. 4, which shows a bicycle saddle 16 having a seating structure 11 of the invention, with a user weight bearing shell 14, and a load-bearing frame 15 to be attached to a movable or stationary support, in this case a bicycle frame.

The seating structure 11 is removably connected to a pair of shock-absorbing devices 1, 1" as described hereinbefore, substantially having the same functional and shape features.

Nevertheless, further embodiments may be provided, in which the seating structure 11 is connected to a single shock-absorbing device or even to more than two of such devices, e.g. three, disposed both at the rear and at the front of the saddle 16

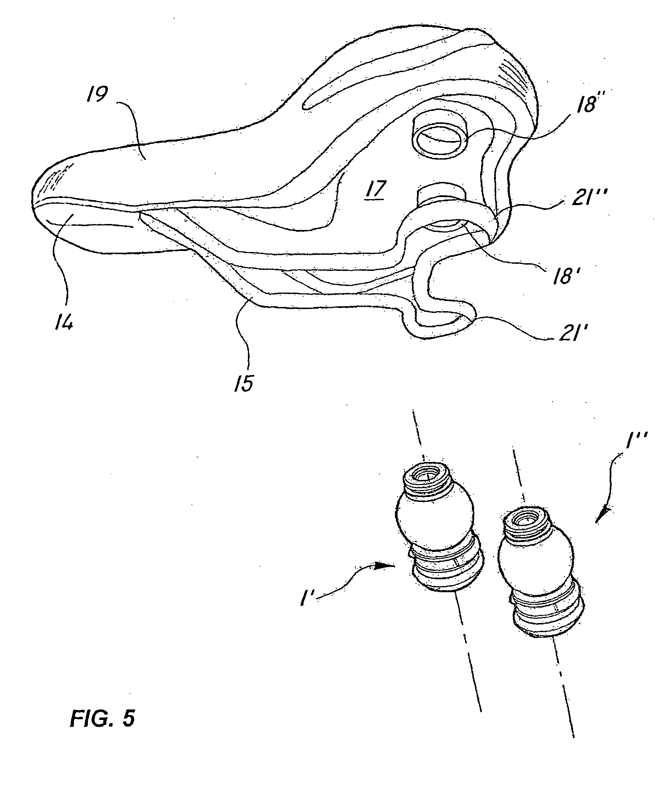

As particularly seen in FIG. 5, the shell 14 may have an underside 17 including a pair of receptacles 18', 18" suitably shaped to removably receive the countershaped upper portion of the attachment means 7 of the corresponding devices 1', 1".

The saddle 16 may finally comprise an upper pad 19 which is designed to contact a user's body.

The load bearing frame 15 may be suitably shaped with a front portion 20 for connection to the underside 17 of the shell 14 and a pair of substantially annular formations 21', 21" located opposite the front portion 20.

These substantially annular formations 21', 21" are designed for either fixed or removable attachment of the lower portions 13 of the attachment means 7 of each of the shock-absorbing devices 1', 1 ".

The above description clearly shows that the invention fulfils the intended objects and particularly meets the requirement of providing a shock-absorbing device for seating structures that ensures control of the elastic reaction transmitted to the seat with which it is associated, in response to the stresses produced by the ordinary operation of the seat.

Thanks to the particular configuration of the valve means 8, the device 1 will have very gradual reciprocating expansion and compression movements, and no impulsive movement will be transmitted to the seat.

The shock-absorbing device and the seating structure of the invention are susceptible of a number of changes and variants, within the inventive concept disclosed in the appended claims.

While the shock-absorbing device and seating structure have been described with particular reference to the accompanying figures, the numerals referred to in the disclosure and claims are only used for the sake of a better intelligibility of the invention and shall not be intended to limit the claimed scope in any manner.

## Claims

1. A shock-absorbing device for mounting to a seating structure, such as a bicycle saddle which comprises a user weight supporting shell (14) attachable to a load-bearing frame (15), wherein the device comprises:
at least one main hollow body (2) that defines a compression chamber (3);
at least one secondary hollow body (4) that defines a expansion chamber (5);
at least one channel (6) for fluid connection between said chambers (3, 5) to allow transfer of at least one fluid from one chamber to the other and vice versa,
means (7) for attachment of said main body (2) and said secondary body (4) to the seating structure (11) with which the device (1) is associated;
wherein
said at least one connection channel (6) has valve means (8) for controlling fluid flow between said chambers (3, 5) in response to elastic deformation thereof,
and wherein
the at least one main hollow body (2) is made of a first elastomeric material to define an elastically deformable compression chamber (3), and the at least one secondary hollow body (4) is made of a second elastomeric material to define an elastically deformable expansion chamber (5).

2. Device as claimed in claim 1, wherein said valve means (8) include a restriction channel (9) of predetermined length (I) and cross section (s).

3. Device as claimed in claim 2, wherein said restriction channel (9) has a varying cross section (s).

4. Device as claimed in any one of the preceding claims, wherein the cross section (s) of said restriction channel (9) has a minimum diameter (dMIN) of a sufficiently small value to cause a considerable change in the high energy dissipation due to a change in the velocity of flow of said at least one fluid.

5. Device as claimed in claim 4, wherein said minimum diameter (dM1N) of said cross section (s) is of 0,1 mm to 10 mm, and is preferably of about 0,5 mm.

6. Device as claimed in any one of the preceding claims, wherein said restriction channel (9) is a metal capillary tube.

7. Device as claimed in claim 1, wherein said fluid, or mixture of fluids, is preloaded in said chambers (3, 5) with a pressure of 1 bar to 10 bar and preferably of 1,3 bar to 3,5 bar.

8. Device as claimed in claim 1, wherein nanometric ferromagnetic particles are dispersed in said fluid or mixture of fluids.

9. Device as claimed in any one of the preceding claims, wherein said valve means (8) include at least one valve (22) for regulating said preload pressure.

10. Device as claimed in claim 9, wherein said at least one regulating valve (22) is in fluid connection with any one of said compression chamber (3), said expansion chamber (5) and said restriction channel (9).

11. Device as claimed in claim 1, wherein said main (2) and secondary (4) bodies are integral and monolithic with each other and are formed of the same elastomeric material.

12. Device as claimed in claim 11, wherein said elastomeric material is selected from the group comprising TPU, SEBS, vulcanized rubber, Megol.

13. Device as claimed in claim 1, wherein said attachment means (7) include an upper portion (12) and a lower portion (13) which are integral with said main body (2), each being removably connectable to any one of the shell (14) and load bearing frame (15) of the seating structure (11) with which the device is associated.

14. A seating structure for human body support, particularly a bicycle saddle structure, comprising
a user weight bearing shell (14),
a load-bearing ame (15) to be attached to a movable or stationary support,
and at least one shock-absorbing device as claimed in any one of claims 1 to 13 interposed between said shell (14) and said load-bearing frame (15).

15. Seating structure as claimed in claim 14, wherein said shell (14) has an underside (17) with at least one suitably shaped receptacle (18', 18") for removably receiving the counter-shaped upper portion (12) of said attachment 10 means (7) of a corresponding shock-absorbing device (1', 1 ").

16. Seating structure as claimed in claim 14, wherein said load bearing frame (15) has at least one substantially annular formation (21', 21") for attachment to the lower portion (13) of said attachment means (8) of a corresponding shock-absorbing device (1', 1 ").

## Patentansprüche

1. Stoßdämpfungsvorrichtung zum Anbringen an einer Sitzkonstruktion wie einem Fahrradsattel, die eine das Gewicht des Benutzers tragende Schale (14) umfasst, die an einem Lasttragrahmen (15) befestigt werden kann, wobei die Vorrichtung umfasst:
mindestens einen Haupthohlkörper (2), der eine Kompressionskammer (3) festlegt;
mindestens einen sekundären Hohlkörper (4), der eine Expansionskammer (5) festlegt;
mindestens einen Kanal (6) für eine Fluidverbindung zwischen den Kammern (3, 5), um den Übergang von mindestens einem Fluid von einer Kammer zur anderen Kammer und umgekehrt zu ermöglichen,
Mittel (7) zum Befestigen des Hauptkörpers (2) und des sekundären Körpers (4) an der Sitzkonstruktion (11), mit der die Vorrichtung (1) verbunden ist;
wobei
der mindestens eine Verbindungskanal (6) Ventilmittel (8) zum Steuern des Fluidstroms zwischen den Kammern (3, 5) als Reaktion auf ihre elastische Verformung hiervon aufweist,
und wobei
der mindestens eine Haupthohlkörper (2) aus einem ersten Elastomerwerkstoff besteht, um eine elastisch verformbare Kompressionskammer (3) festzulegen, und der mindestens eine sekundäre Hohlkörper (4) aus einem zweiten Elastomerwerkstoff besteht, um eine elastisch verformbare Expansionskammer (5) festzulegen.

2. Vorrichtung nach Anspruch 1, bei der die Ventilmittel (8) einen Drosselkanal (9) mit einer vorbestimmten Länge (l) und einem vorbestimmten Querschnitt (s) umfassen.

3. Vorrichtung nach Anspruch 2, bei welcher der Drosselkanal (9) einen veränderlichen Querschnitt (s) aufweist.

4. Vorrichtung nach irgendeinem der vorherigen Ansprüche, bei welcher der Querschnitt (s) des Drosselkanals (9) einen Mindestdurchmesser (dMIN) mit einem hinreichend kleinen Wert aufweist, um eine erhebliche Änderung der hohen Energiedissipation mittels einer Änderung der Strömungsgeschwindigkeit des mindestens einen Fluids zu verursachen.

5. Vorrichtung nach Anspruch 4, bei welcher der Mindestdurchmesser (dMIN) des Querschnitts (s) 0,1 mm bis 10 mm und vorzugsweise ungefähr 0,5 mm beträgt.

6. Vorrichtung nach irgendeinem der vorherigen Ansprüche, bei welcher der Drosselkanal (9) ein Kapillarröhrchen aus Metall ist.

7. Vorrichtung nach Anspruch 1, bei der das Fluid oder das Fluidgemisch in den Kammern (3, 5) mit einem Druck von 1 bar bis 10 bar und vorzugsweise von 1,3 bar bis 3,5 bar vorgespannt ist.

8. Vorrichtung nach Anspruch 1, bei der nanometrische ferromagnetische Partikel in dem Fluid oder Fluidgemisch fein verteilt sind.

9. Vorrichtung nach einem der vorherigen Ansprüche, bei der die Ventilmittel (8) mindestens ein Ventil (22) zum Regeln des Vorspanndrucks umfassen.

10. Vorrichtung nach Anspruch 9, bei der das mindestens eine Regelventil (22) in einer Fluidverbindung mit einem von der Kompressionskammer (3), der Expansionskammer (5) und dem Drosselkanal (9) steht.

11. Vorrichtung nach Anspruch 1, bei welcher der Hauptkörper (2) und der sekundäre Körper (4) einen einheitlichen Teil miteinanderbilden und aus dem selben Elastomerwerkstoff sind.

12. Vorrichtung nach Anspruch 11, bei welcher der Elastomerwerkstoff aus der Gruppe ausgewählt ist, die TPU, SEBS, Gummi und Megol umfasst.

13. Vorrichtung nach Anspruch 1, bei der die Befestigungsmittel (7) einen oberen Teil (12) und einen unteren Teil (13) umfassen, die mit dem Hauptkörper (2) einheitlich sind, wobei jeder dieser Teile mit einem zwischen der Schale (14) und dem Lasttragrahmen (15) der Sitzkonstruktion (11) lösbar verbunden werden kann, mit der die Vorrichtung verbunden ist.

14. Sitzkonstruktion zum Tragen eines menschlichen Körpers und insbesondere eine Fahrradsattelkonstruktion, umfassend
eine das Gewicht des Benutzers tragende Schale (14),
einen Lasttragrahmen (15), der an einem beweglichen oder unbeweglichen Träger zu befestigen ist,
und mindestens eine Stoßdämpfungsvorrichtung nach einem der Ansprüche 1 bis 13, die zwischen die Schale (14) und den Lasttragrahmen (15) eingefügt ist.

15. Sitzkonstruktion nach Anspruch 14, bei der die Schale (14) eine Unterseite (17) mit mindestens einer in geeigneter Weise geformten Aufnahme (18', 18") zum lösbaren Aufnehmen des oberen Gegenteils (12) der Befestigungsmittel (7) einer entsprechenden Stoßdämpfungsvorrichtung (1', 1 ") aufweist.

16. Sitzkonstruktion nach Anspruch 14, bei welcher der Lasttragrahmen (15) mindestens ein im Wesentlichen ringförmiges Gebilde (21', 21") zum Befestigen am unteren Teil (13) der Befestigungsmittel (8) einer entsprechenden Stoßdämpfungsvorrichtung (1', 1") aufweist.

## Revendications

1. Dispositif amortisseur pour le montage sur une structure de siège, telle qu'une selle de bicyclette qui comprend une coquille de support du poids de l'utilisateur (14) pouvant être fixée à un châssis porteur (15), dans lequel le dispositif comprend :
au moins un corps creux principal (2) qui définit une chambre de compression (3) ;
au moins un corps creux secondaire (4) qui définit une chambre d'expansion (5) ;
au moins un canal (6) pour la communication de fluide entre lesdites chambres (3, 5) pour permettre le transfert d'au moins un fluide d'une chambre à l'autre et inversement,
dans lequel
des moyens (7) pour l'attaque dudit corps principal (2) et dudit corps secondaire (4) à la structure de siège (11) à laquelle le dispositif (1) est associé,
ledit au moins un canal de connexion (6) comprend un moyen de vanne (8) pour contrôler le flux de fluide entre lesdites chambres (3, 5) en réponse à leur déformation élastique,
et dans lequel
l'au moins un corps creux principal (2) est constitué d'un premier matériau élastomère pour définir une chambre de compression déformable élastiquement (3) et l'au moins un corps creux secondaire (4) est constitué d'un deuxième matériau élastomère pour définir une chambre d'expansion déformable élastiquement (5).

2. Dispositif selon la revendication 1, dans lequel lesdits moyens de vanne (8) comprennent un canal de restriction (9) de longueur (1) et de section transversale (s) prédéterminées.

3. Dispositif selon la revendication 2, dans lequel ledit canal de restriction (9) a une section transversale (s) variable.

4. Dispositif selon l'une quelconque des revendications précédentes, dans lequel la section transversale (s) dudit canal de restriction (9) a un diamètre minimum (dMIN) d'une valeur suffisamment réduite pour provoquer une variation considérable de la haute dissipation d'énergie due à une variation de la vitesse d'écoulement dudit au moins un fluide.

5. Dispositif selon la revendication 4, dans lequel ledit diamètre minimum (dMIN) de ladite section transversale (s) est de 0,1 mm à 10 mm, et de préférence d'environ 0,5 mm.

6. Dispositif selon l'une quelconque des revendications précédentes, dans lequel ledit canal de restriction (9) est un tube capillaire métallique.

7. Dispositif selon la revendication 1, dans lequel ledit fluide, ou mélange de fluides, est pré-chargé dans lesdites chambres (3, 5) avec une pression de 1 bar à 10 bar et de préférence de 1,3 bar à 3,5 bar.

8. Dispositif selon la revendication 1, dans lequel des particules ferromagnétiques nanométriques sont dispersées dans ledit fluide ou mélange de fluides.

9. Dispositif selon l'une quelconque des revendications précédentes, dans lequel lesdits moyens de valve (8) comprennent au moins une valve (22) pour réguler ladite pression de pré-charge.

10. Dispositif selon la revendication 9, dans lequel ladite au moins une valve régulatrice (22) est en communication de fluide avec l'un quelconque de ladite chambre de compression (3), ladite chambre d'expansion (5) et ledit canal de restriction (9).

11. Dispositif selon la revendication 1, dans lequel lesdits corps principal (2) et secondaire (4) sont solidaires et monolithiques l'un avec l'autre et sont formés du même matériau élastomère.

12. Dispositif selon la revendication 11, dans lequel ledit matériau élastomère est sélectionné dans le groupe comprenant TPU, SEBS, caoutchouc vulcanisé, Megol.

13. Dispositif selon la revendication 1, dans lequel lesdits moyens de fixation (7) comprennent une partie supérieure (12) et une partie inférieure (13) qui sont solidaires avec ledit corps principal (2), chacune pouvant être reliée de manière amovible avec l'un quelconque de la coquille (14) et du châssis porteur (15) de la structure de siège (11) à laquelle le dispositif est associé.

14. Structure de siège pour le support d'un corps humain, en particulier une structure de selle de bicyclette, comprenant
une coquille de support du poids de l'utilisateur (14),
un châssis porteur (15) destiné à être fixé à un support mobile ou fixe, et
au moins un dispositif amortisseur selon l'une quelconque des revendications 1 à 13 interposé entre ladite coquille (14) et ledit châssis porteur (15).

15. Structure de siège selon la revendication 14, dans laquelle ladite coquille (14) comporte un côté inférieur (17) avec au moins une cavité profilée de manière appropriée (18', 18") pour recevoir la partie supérieure contre-profilée (12) desdits moyens de fixation (7) d'un dispositif amortisseur correspondant (1', 1 ").

16. Structure de siège selon la revendication 14, dans laquelle ledit châssis porteur (15) comporte au moins une formation sensiblement annulaire (21', 21 ") pour la fixation à la partie inférieure (13) desdits moyens de fixation (8) d'un dispositif amortisseur correspondant (1', 1").
